# EUROPEAN PATENT SPECIFICATION

(11) **EP 4 261 786 B1**
(45) Date of publication and mention of the grant of the patent: **09.12.2026**
(21) Application number: 23158130.7
(22) Date of filing: 23.02.2023
(51) Int. Cl.: G06T 11/00

(54) **METHODS AND SYSTEM FOR LOW DOSE X RAY COMPUTED TOMOGRAPHY PERFUSION IMAGING**
VERFAHREN UND SYSTEM ZUR PERFUSIONSBILDGEBUNG MIT NIEDRIGDOSIERTER RÖNTGENCOMPUTERTOMOGRAPHIE
PROCÉDÉS ET SYSTÈME D'IMAGERIE DE PERFUSION PAR TOMOGRAPHIE PAR ORDINATEUR À RAYONS X À FAIBLE DOSE

(30) Priority: 28.03.2022 IN 202221018042
(43) Date of publication of application: 18.10.2023
(73) Proprietor: Tata Consultancy Services Limited, Maharashtra (IN)
(72) Inventor: GUBBI LAKSHMINARASIMHA, Jayavardhana Rama, Bangalore 560066, Karnataka (IN); PAMULAKANTY SUDARSHAN, Viswanath, Bangalore 560066, Karnataka (IN); SENGAR, Vartika, Bangalore 560066, Karnataka (IN); PAL, Arpan, Kolkata 700160 , Bengal (IN); REDDY KANCHAM, Pavan Kumar, Bangalore 560066, Karnataka (IN)
(74) Representative: Goddar, Heinz J.

(56) References cited:
- WO-A1-99/53963
- US-A1- 2014 228 674
- FANG RUOGU ET AL: "Tissue-Specific Sparse Deconvolution for Low-Dose CT Perfusion", 22 September 2013, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 114 - 121, ISBN: 978-3-540-74549-5, XP047490849
- KADIMESETTY VENKATA S ET AL: "Convolutional Neural Network-Based Robust Denoising of Low-Dose Computed Tomography Perfusion Maps", IEEE TRANSACTIONS ON RADIATION AND PLASMA MEDICAL SCIENCES, IEEE, vol. 3, no. 2, 1 March 2019 (2019-03-01), pages 137 - 152, XP011712819, ISSN: 2469-7311, [retrieved on 20190301], DOI: 10.1109/TRPMS.2018.2860788
- FANG RUOGU ET AL: "Tissue-specific sparse deconvolution for brain CT perfusion", COMPUTERIZED MEDICAL IMAGING AND GRAPHICS, PERGAMON PRESS, NEW YORK, NY, US, vol. 46, 21 May 2015 (2015-05-21), pages 64 - 72, XP029346367, ISSN: 0895-6111, DOI: 10.1016/J.COMPMEDIMAG.2015.04.008
- FANG RUOGU ET AL: "Sparsity-Based Deconvolution of Low-Dose Perfusion CT Using Learned Dictionaries", 1 October 2012, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 272 - 280, ISBN: 978-3-540-74549-5, XP047463696

## Description

### CROSS-REFERENCE TO RELATED APPLICATIONS AND PRIORITY

The present application claims priority to Indian application no. 202221018042, filed on March 28, 2022.

### TECHNICAL FIELD

The disclosure herein generally relates to Computer Tomography (CT) scanning, and, more particularly, to a method and system for low-dose X-ray CT structural and perfusion image reconstruction.

### BACKGROUND

Dynamic computed tomography (CT) perfusion is a clinically established imaging method for stroke and subarachnoid hemorrhage. A perfusion imaging session provides spatial cerebral blood flow (CBF) and cerebral blood volume (CBV) maps along with other perfusion parameters such as mean transit time (MTT) and time to peak (TTP). Despite its advantages, a single perfusion scanning session involves multiple CT scans taken in succession and the amount of radiation involved is a cause of concern. Lowering the dose compromises the signal to noise ratio in the reconstructed CT perfusion (CTP) images as well as the functional CBF maps and hinders accurate diagnosis and timely intervention.

Several state-of-the-art mechanisms have focused on achieving diagnostic-quality images under low-dose settings for general CT imaging. However, the typical process to obtain the perfusion maps involves two steps: (i) reconstructing the low-dose CT images, and then (ii) computing the perfusion maps using algorithms like truncated singular value decomposition. That is, the CT images are fixed during the optimization process to generate perfusion maps. This can lead to suboptimal CT images with respect to the perfusion maps generated, although they might appear spatially smooth or denoised.

FANG RUOGU ET AL: "Tissue-Specific Sparse Deconvolution for Low-Dose CT Perfusion", 22 September 2013, SAT 2015 18TH INTERNATIONAL CONFERENCE, AUSTIN, TX, USA, SEPTEMBER 24-27, 2015 in LECTURE NOTES IN COMPUTER SCIENCE, SPRINGER, BERLIN, HEIDELBERG, PAGE(S) 114 - 121, introduces tissue specific sparse deconvolution to preserve the subtle perfusion information in the low-contrast tissue classes by learning tissue-specific dictionaries for each tissue class, and restore the low-dose perfusion maps by joining the tissue segments reconstructed from the corresponding dictionaries. Extensive validation on clinical datasets of patients with cerebrovascular disease demonstrates the superior performance of our proposed method with the advantage of better differentiation between abnormal and normal tissue in these patients.

KADIMESETTY VENKATA S ET AL: "Convolutional Neural Network-Based Robust Denoising of Low-Dose Computed Tomography Perfusion Maps", IEEE TRANSACTIONS ON RADIATION AND PLASMA MEDICAL SCIENCES, IEEE, vol. 3, no. 2, 1 March 2019, pages 137-152, introduces a denoising convolutional neural network (DCNN) was proposed that relies only on computed perfusion maps for performing the denoising step. The network was trained with a large number of low-dose digital brain phantom perfusion maps to provide an approximation to the corresponding high-dose perfusion maps.

FANG RUOGU ET AL: "Tissue-specific sparse deconvolution for brain CT perfusion", COMPUTERIZED MEDICAL IMAGING AND GRAPHICS, PERGAMON PRESS, NEW YORK, NY, US, vol. 46, 21 May 2015, pages 64-72, proposes a tissue-specific sparse deconvolution method to address the limitations above. Previous methods fail to preserve the low-contrast, delicate tissue categories which are essential for cerebrovascular disease diagnosis. We overcome this difficulty by incorporating segmentation and deconvolution in the a unified framework and learning different dictionaries for each tissue category from the high-dose data.

### SUMMARY

Embodiments of the present disclosure present technological improvements as solutions to one or more of the above-mentioned technical problems recognized by the inventors in conventional systems. For example, in one embodiment, a processor implemented method is provided. The method involves acquiring, via one or more hardware processors, a plurality of frames from a low-dose X-ray computerized tomography (CT) perfusion scan of a subject. Further, one or more contrast enhanced frames are identified from among the plurality of frames, via the one or more hardware processors. Further, a plurality of tissue enhancement measurements (C) are obtained from the one or more contrast enhanced frames, via the one or more hardware processors. Further, an optimization problem for joint estimation of a set of structural CT images and a perfusion map is modeled based on the plurality of tissue enhancement measurements (C), via the one or more hardware processors. Further, the optimization problem is solved, via the one or more hardware processors, by determining an average structural prior image (*U̅*) and a functional image (V) with a 3D image-gradient-based prior and another patch-based prior with a fixed patch length, comprising, iteratively performing, a) reconstructing a pre-defined number of frames (M) of a structural image obtained using the 3D image-gradient-based prior and then averaging the M frames to obtain the image U, and b) applying deconvolution term and the patch-based prior information with information from U, to obtain V.

In another aspect, a system is provided. The system includes one or more hardware processors, a communication interface, and a memory comprising a plurality of instructions. The plurality of instruction when executed, cause the one or more hardware processors to acquire a plurality of frames from a low-dose X-ray computerized tomography (CT) perfusion scan of a subject. Further, one or more contrast enhanced frames are identified from among the plurality of frames, via the one or more hardware processors. Further, a plurality of tissue enhancement measurements (C) are obtained from the one or more contrast enhanced frames, via the one or more hardware processors. Further, an optimization problem for joint estimation of a set of structural CT images and a perfusion map is modeled based on the plurality of tissue enhancement measurements (C), via the one or more hardware processors. Further, the optimization problem is solved, via the one or more hardware processors, by determining an average structural prior image (*U̅*) and a functional image (V) with a 3D image-gradient-based prior and another patch-based prior with a fixed patch length, comprising, iteratively performing, a) reconstructing a pre-defined number of frames (M) of a structural image obtained using the 3D image-gradient-based prior and then averaging the M frames to obtain the image U, and b) applying deconvolution term and the patch-based prior information with information from U, to obtain V.

In yet another aspect, a non-transitory computer readable medium is provided. The non-transitory computer readable medium includes a plurality of instructions, which when executed, causes one or more hardware processors to acquire a plurality of frames from a low-dose X-ray computerized tomography (CT) perfusion scan of a subject. Further, one or more contrast enhanced frames are identified from among the plurality of frames, via the one or more hardware processors. Further, a plurality of tissue enhancement measurements (C) are obtained from the one or more contrast enhanced frames, via the one or more hardware processors. Further, an optimization problem for joint estimation of a set of structural CT images and a perfusion map is modeled based on the plurality of tissue enhancement measurements (C), via the one or more hardware processors. Further, the optimization problem is solved, via the one or more hardware processors, by determining an average structural prior image (*U̅*) and a functional image (V) with a 3D image-gradient-based prior and another patch-based prior with a fixed patch length, comprising, iteratively performing, a) reconstructing a pre-defined number of frames (M) of a structural image obtained using the 3D image-gradient-based prior and then averaging the M frames to obtain the image U, and b) applying deconvolution term and the patch-based prior information with information from U, to obtain V.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for reconstruction of Computer Tomography (CT) images, according to some embodiments of the present disclosure.
FIGS. 2A and 2B (collectively referred to as FIG. 2) is a flow diagram depicting steps involved in the process of reconstructing the CT images, using the system of FIG. 1, according to some embodiments of the present disclosure.
FIG. 3 is a flow diagram depicting steps involved in the process of determining progression of a neurogenerative disease, using the system of FIG. 1, in accordance with some embodiments of the present disclosure.
FIGS. 4A, 4B, and 4C depict example figures of the reconstruction of the CT images, by the system of FIG. 1, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

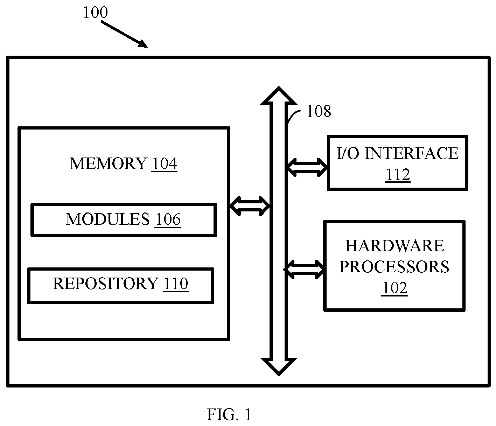

Several state-of-the-art mechanisms have focused on achieving diagnostic-quality images under low-dose settings for general CT imaging. However, the typical process to obtain the perfusion maps involves two steps: (i) reconstructing the low-dose CT images, and then (ii) computing the perfusion maps using algorithms like truncated singular value decomposition. That is, the CT images are fixed during the optimization process to generate perfusion maps. This can lead to suboptimal CT images with respect to the perfusion maps generated, although they might appear spatially smooth or denoised. The method and system disclosed in the embodiments herein address this issue by modeling and solving an optimization problem for joint estimation of a set of structural CT images and a perfusion map. Referring now to the drawings, and more particularly to FIG. 1 through FIG. 4D, where similar reference characters denote corresponding features consistently throughout the figures, there are shown preferred embodiments and these embodiments are described in the context of the following exemplary system and/or method.

FIG. 1 illustrates an exemplary system for reconstruction of Computer Tomography (CT) images, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of reconstruction of CT images, being performed by the system 100. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the reconstruction of the CT images.

The data repository (or repository) 110 may include a plurality of abstracted piece of code for refinement and data that is processed, received, or generated as a result of the execution of the plurality of modules in the module(s) 106.

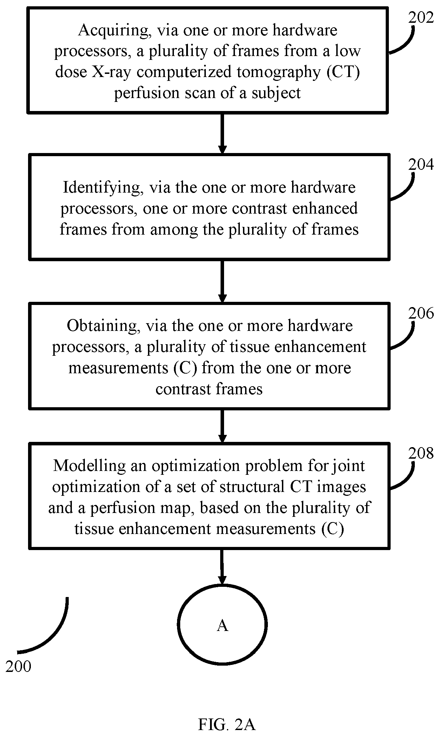

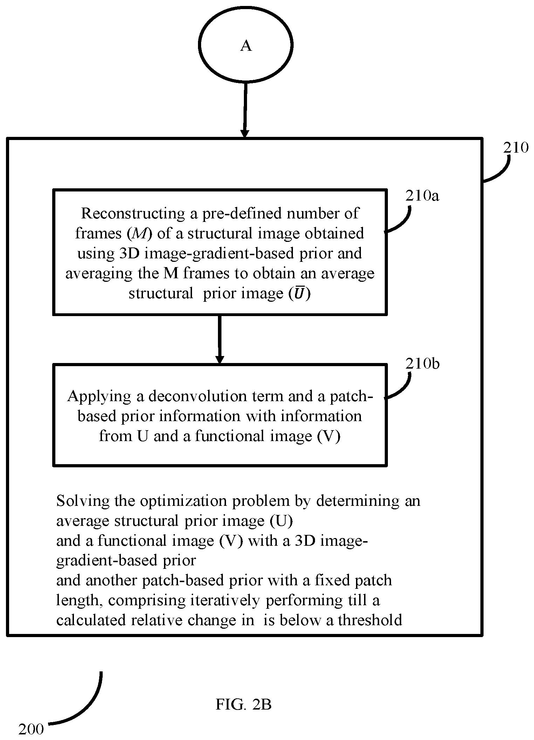

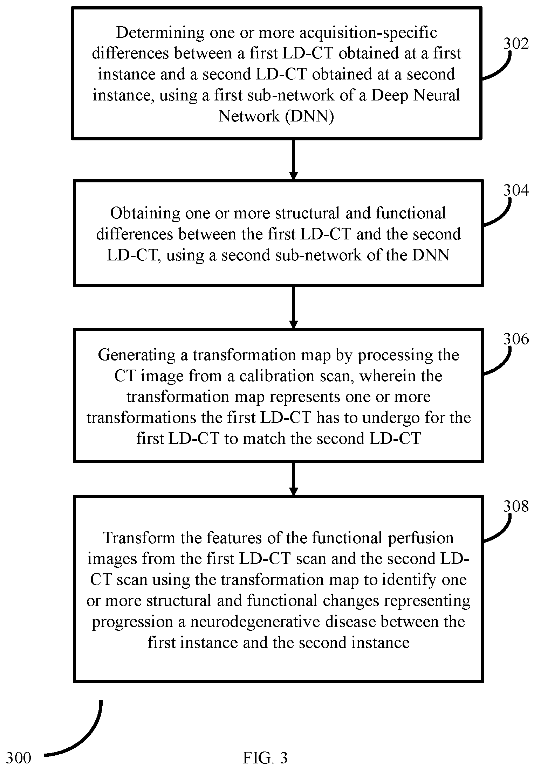

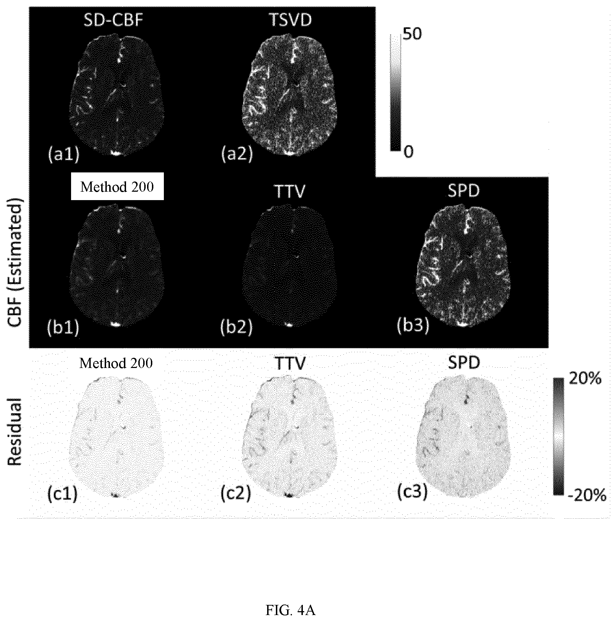

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 2 and FIG. 3, and the example figures in FIGS. 4A through 4C.

FIGS. 2A and 2B (collectively referred to as FIG. 2) is a flow diagram depicting steps involved in the process of reconstructing the CT images, using the system of FIG. 1, according to some embodiments of the present disclosure.

At step 202 of a method 200 depicted in FIG. 2, the system 100 acquires, via the one or more hardware processors 102, a plurality of frames from a low dose X-ray computerized tomography (CT) perfusion scan of a subject. In this context, 'low dose' refers to the fact that the CT perfusion scan has been done by using a low quantity of radiation. Further, at step 204 of the method 200, the system 100 identifies, via the one or more hardware processors, one or more contrast enhanced frames, from among the plurality of frames. The plurality of frames include contrast enhanced frames as well as non contrast enhanced frames. The system 100 identifies all the contrast enhanced frames and the non contrast enhanced frames, and then the contrast enhanced frames are processed further at step 206. For example, consider that total number of frames is M+T, where M frames are the non contrast enhanced frames, and contain structural data that may be used in construction of a cerebral blood flow (CBF) map. Let ${\left\{{U}_{t}\right\}}_{t = 1}^{T}$ represent a set of *T* dynamic CT images required for computing the CBF map *V* (also referred to as 'perfusion map'). If *Yₜ* represents measurement corresponding to t^{th} scan, then a forward model implemented by the system for the reconstruction of CT image is represented as *Yₜ =* 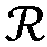 *Uₜ,* where operator 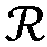 (.) represents an imaging system (i.e. hardware) used for the CT imaging and depends on detector arrangements and a system acquisition scheme. For the forward model, tissue enhancement measurements (*C*) and unknown tissue-residue (*R*) form column vectors. Then at step 206 of the method 200, the system 100 obtains, via the one or more hardware processors, a plurality of tissue enhancement measurements (*C*) from the one or more contrast enhanced frames. The plurality of tissue enhancement measurements *(C)* is obtained from the one or more contrast enhanced frames by using an equation $C = {C}_{a} R ⊙ D \left(V\right)$ (1) wherein *Cₐ* is a block-circulant construction of an arterial input function (AIF), *D*(*.*) outputs a diagonal matrix with elements of *V* along its diagonal, *V* is a perfusion map constructed from the one or more contrast enhanced frames, and ⊙ represents element-wise product.

Further, at step 208 of the method 200, the system 100 models, via the one or more hardware processors, an optimization problem for joint estimation of a set of structural CT images and a perfusion map, based on the plurality of tissue enhancement measurements (*C*). The modeled optimization problem is represented as minimizing the objective function in equation (2): $arg {min}_{U , V} {D}_{U} \left(U\left|Y\right.\right) + {D}_{V} \left(V\left|C\right.\right) + {λ}_{U} {Φ}_{U} \left(U\right) + {λ}_{V} {Φ}_{V} \left(V\right)$ (2) Where, *D_{U}*(.) and *D_{V}*(.) represent data fidelity terms corresponding to reconstruction of the structural CT images $U : = \left({\left({U}_{m}\right)}_{m = 1}^{M}\right)$ and the CBF map *V* respectively. Φ*_{U}*(.) and *ψ_{V}*(.) represent regularizers for *U* and *V* respectively.

Further, at step 210 of the method 200, the system 100 solves, via the one or more hardware processors, the optimization problem by determining an average structural prior image (*U̅*) and a functional image (*V*) with a 3D image-gradient-based prior and another patch-based prior with a fixed patch length. Determining *U* and *V* comprises iteratively performing the following sub-steps. At step 210a, the system 100 reconstructs a pre-defined number of frames (*M*) of a structural image obtained using the 3D image-gradient-based prior and then averaging the M frames to obtain the image *U*, and then at step 210b, applies deconvolution term and the patch-based prior information with information from *U*, to obtain *V*. These steps ate further explained below.

For reconstructing *U*, the system 100 enforces gradient sparsity along both spatial and temporal directions, and hence, Φ(*U*) is defined as: ${Φ}_{U} \left(U\right) = {\sum }_{m = 1}^{M} {TV}_{x} \left({U}_{m}\right) + {TV}_{y} \left({U}_{m}\right) + {TV}_{z} \left({U}_{m}\right) + {TV}_{t} \left({U}_{m}\right) ,$ where TVₓ(·), TV_{y}(·), TV_{z}(·), TVₜ(·) denote the smoothed total variation (*TV*) norm which computes the forward finite difference between adjacent pixels along the three spatial directions and the temporal direction..

The system 100 uses an anatomically-weighted gradient-based penalty for reconstructing the CBF map. In this process, the system 100 initially computes an arithmetic mean *U̅* of the set of structural CT images *U.* Further, an anatomically different prior is defined as ${Φ}_{V} \left(\left.V\right|\overline{U}\right) = {\sum }_{i = 1}^{N} {\sum }_{j ∈ N \left(i\right)} {W}_{i , j} \left(\overline{U}\right) \left|{V}^{i}-{V}^{j}\right|$ (3) where weights *W_{i,j}* are obtained based on intensities in *U̅* as: ${W}_{i , j} \left(\overline{U}\right) = \left\{\begin{matrix}1 for k nearest neighbours as per {\left‖{P}_{i}\left(\overline{U}\right)-{P}_{j}\left(\overline{U}\right)\right‖}_{2}^{2} \\ 0 otherwise\end{matrix}\right.$ (4) Where, 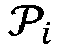 extracts a patch of suitable size from a given image around the voxel location *i* and *K* is a scalar that decides how many voxels in the neighbourhood participate in the penalty function. Hence, the overall objective function for the joint estimation problem is given as: $arg {min}_{U , V} {\sum }_{m}^{M} {\left|\left|{RU}_{m}-{Y}_{m}\right|\right|}_{2}^{2} + {\left|\left|C-{C}_{a}R⊙D\left(V\right)\right|\right|}_{2}^{2} + {λ}_{U} Φ \left(U\right) + {λ}_{V} Ψ \left(V\right)$ (5)

The optimization problem in (5) is solved by the system 100 by iteratively alternating between the dynamic set *U* and the image *V* using the projected gradient descent. Step size of the gradient descent is adjusted in an adaptive manner such that the reduction in the objective function is ensured. To simplify the complexity of the objective function, the objective function is modified such that while evaluating the prior *ψ*(*V*|*U*), value of *U* from the previous iteration is used. This design leads to smooth convex problems to solve for *V* given *U* and vice versa. Thus, for (*n* + 1)*^{th}* iteration of updating the variables *U, V* , the update for *V* includes (i) computing the arithmetic mean *U̅* of the set of images ${\left\{U\right\}}_{m = 1}^{M}$ from n^{th} iteration, (ii) computing the weights *Wi, j* based on *U̅,* and (iii) computing the gradient and the sum of the prior penalty. The system 100 terminates/stops the iterations when the relative change in *V* is smaller than a predefined threshold, which may be configured as per implementation requirements. In various embodiments, steps in method 200 may be performed in the same order as depicted or in any alternate order that is technically feasible. In another embodiment, one or more steps in method 200 may be omitted.

FIG. 3 is a flow diagram depicting steps involved in the process of determining progression of a neurogenerative disease, using the system of FIG. 1, in accordance with some embodiments of the present disclosure. The CT image reconstruction as in method 200 may be used for determining progression of a neurogenerative disease. The progression is determined based on health condition of a subject measured over a time period, i.e. based on CT scan images obtained at different time instances. At step 302 of a method 300 depicted in FIG. 3, the system 100 determines one or more acquisition-specific differences between a first Low Dose CT (LD-CT) obtained at a first instance and a second LD-CT obtained at a second instance, using a first sub-network of a Deep Neural Network (DNN). The acquisition-specific differences may refer to differences caused by change in equipment and other factors. For example, equipment from different manufacturers may have different characteristics, such as change in depth, saturation and so on. Such differences are referred to as acquisition-specific differences.

Further, at step 304 of the method 300, the system 100 obtains one or more structural and functional differences between the first LD-CT and the second LD-CT, using a second sub-network of the DNN. The structural and functional differences may refer to change in physical characteristics of the subject, for example, change in bone structure, tissue growth and so on. Further, at step 306 of the method 300, a transformation map is generated by processing the CT image from a calibration scan, wherein the transformation map represents one or more transformations the first LD-CT has to undergo for the first LD-CT to match the second LD-CT, i.e. essentially it captures differences between the first LD-CT and the second LD-CT. Further, at step 308, the system 100 transforms the features of a plurality of functional perfusion images from the first LD-CT scan and the second LD-CT scan using the transformation map to identify one or more structural and functional changes representing progression a neurodegenerative disease between the first instance and the second instance. The identified one or more structural and functional changes representing progression the neurodegenerative disease may be then provided as output to the user, using appropriate output means of the system 100. In various embodiments, steps in method 300 may be performed in the same order as depicted or in any alternate order that is technically feasible. In another embodiment, one or more steps in method 300 may be omitted.

### Experiments and Results:

The images and datasets used during the experiments are from the following sources. One dataset is from Ruogu Fang, Tsuhan Chen, Pina Sanelli: Towards Robust Deconvolution of Low-Dose Perfusion CT: Sparse Perfusion Deconvolution Using Online Dictionary Learning. Medical Image Analysis 17(4): 417-428 (2013). This dataset is referred to as D1. Another dataset, called D2, is from a) Oskar Maier et al. ISLES 2015 - A public evaluation benchmark for ischemic stroke lesion segmentation from multispectral MRI Medical Image Analysis, Available online 21 July 2016, ISSN 1361-8415 http://dx.doi.orsg/10.1016/j.media.2016.07.009. Kistler et al., and b) The virtual skeleton database: an open access repository for biomedical research and collaboration. JMIR, 2013 http://doi.org//10.2196/jmir.2930.

During the experiments conducted, CBF maps generated by the system 100 were compared with three other reconstruction methods :- a) truncated singular value decomposition (TSVD), b) sparse perfusion deconvolution (SPD), and c) tensor total variation (TTV). To validate the usefulness of the joint estimation of the prior CT images and the CBF maps, the CBF maps generated by the system 100 were compared with CBF map generated with an MRF prior but with an independently reconstructed CT prior image. The latter approach is referred to as one-sided reconstruction. Two different datasets were used for validating the efficacy of the method 200 and the system 100: (i) D1:- a single subject in vivo data shared as part of the code for the SPD method, and (ii) D2:- data hosted as part of the ISLES challenge. Acquisition details of D1 included standard-dose acquisition at 190 mA and consists of 119 CT frames including 10 non-contrast enhanced frames. For both D1 and D2, CTP images were generated under different low-dose (LD) settings by generating the projection data from the SD-CT images, applying a scaled Poisson noise in the transform domain and then finally the LDCT images were reconstructed using filtered back-projection with a cosine filter. While efficacy of the system 100 was demonstrated on a low-dose data for D1 and D2, three different low-dose datasets called LD-1, LD-2 and LD-3 were generated.

Results obtained during the experiments are depicted in FIGS. 4A through 4D. FIG. 4A depicts Qualitative evaluation on D1 with estimated CBF maps from different methods at low-dose level, where, (a1): CBF obtained using TSVD from SD-CT data, (a2): CBF obtained using TSVD from LD-CT data (PSNR 30.9 dB), (b1) to (b3): CBF obtained using the method 200 for (40.6 dB), TTV (37.4 dB), and SPD (34.1 dB), respectively, and (c1) - (c3) are relative error maps of row (b) with the SD-CBF map (a1).

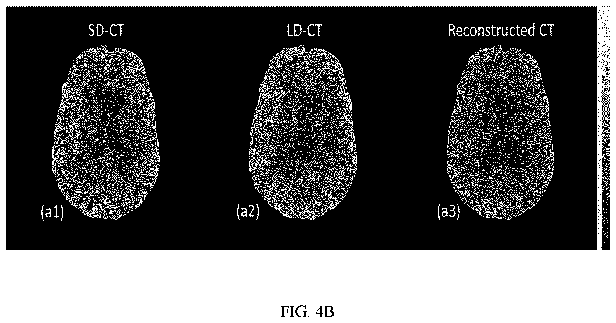

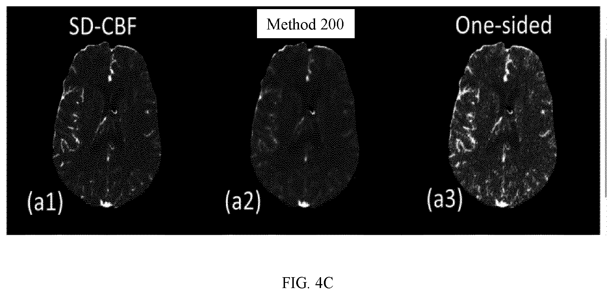

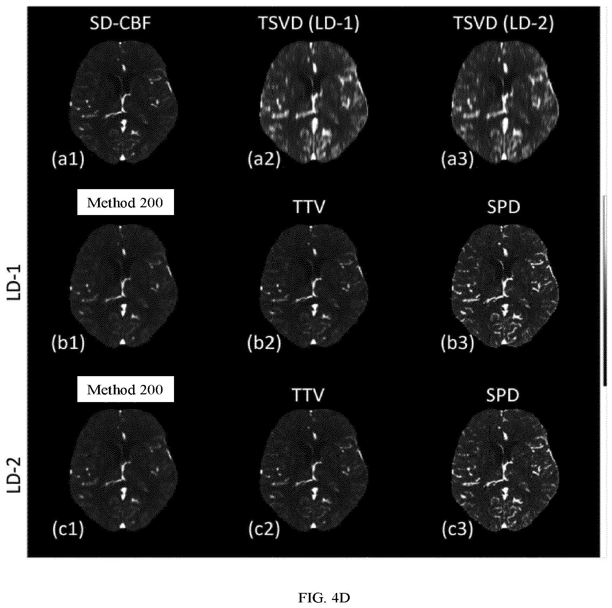

For the real data from D1 (FIG. 4A (a1)), the SD-CBF map obtained using TSVD on the SD-CTP data, seemed noisy (not smooth) perhaps due to the noise inherent across the dynamic SD-CT images. Additional post-reconstruction smoothing for the SD-CBF map wasn't performed. On low-dose data, TSVD-based deconvolution (FIG. 4A (a2)) by retaining 10% of the eigenvalues retains more noise compared (PSNR 26.4 dB with respect to the SD-CBF image) to other methods was observed. The sparse dictionary prior based SPD method removed most of the noise (FIG. 4A (b3)). TTV (FIG. 4A (b2)) enforced sparsity of the gradients across the spatial and temporal dimensions encouraging piecewise continuous results. Although TTV was found to be improving over SPD, a slight loss of contrast was observed compared to SPD and the method 200. On the other hand, reconstruction using a weighted MRF prior (FIG. 4A (b1)) represented fine-scale regularity, in the form of smoothness without much loss in contrast and was found to be closest to (PSNR 36.5 dB) the SD-CBF image. More importantly, the method 200 found to be having much smaller residue (FIG. 4A (c1)) compared to all other methods (FIG. 4A (c2)-(c3)). FIG. 4B compared the mean of the reconstructed CT prior image of the joint estimation task being done by the system 100 (FIG. 4B a(3)) with the mean of the prior images (first few frames of the dynamic sequence) from SD-CT (FIG. 4B a(1)) as well as the LD-CT data (FIG. 4B a(2)). The reconstructed CT obtained using the TV prior applied along all directions showed reduced noise and smoothly varying structures compared to the prior image using LD-CT image. Effect of these priors on the estimation of CBF maps were studied and is depicted in FIG. 4C. The one-sided reconstruction (FIG. 4C a(3)) used the prior image from the set of LD-CT images within the structural image weighted MRF prior. This image still contained much of the random noise and is not as smooth in structure and contrast in comparison to the method 200 (FIG. 4C a(2)). FIG. 4D depicts comparison of performance of the method 200 with other priors. For the dataset D2, results were obtained across different noise levels LD-1 and LD-2, using the method 200. The TSVD-based method produced noisy CBF maps as shown in FIG. 4D a(2) and FIG. 4D a(3) for LD-1 and LD-2 respectively. At LD-1, with relatively high SNR compared to LD-2 and LD-3, although both TTV (FIG. 4D b(2)) and the method 200 (FIG. 4D b(1)) improve over SPD, there is little difference in the image quality between TTV and the method 200. The results indicated that there is a quantitative improvement of ^{≈}1 dB over the TTV in terms of PSNR. On the other hand, at LD-2, TTV (FIG. 4D c(2)) retains noise substantially higher than the method 200 and showed quantitatively less PSNR (^{≈} 2.5 dB) than that of the method 200 (PSNR 40 dB).

Similarly, a quantitative evaluation was performed to assess performance of the method 200 and the TTV for three different dose levels LD-1, LD-2, and LD-3, across 25 subjects each having multiple 2D slices. Experimental results indicated that the method 200 outperformed the prior methods, and the TTV method was found to be closer to the method 200 for LD-1, whereas significant improvements were noticed for LD-2 and LD-3.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of low-dose CT image reconstruction. The embodiment, thus provides a method and system for low-dose CT image reconstruction. Moreover, the embodiments herein further provide a mechanism of modelling an optimization problem for joint optimization of a set of structural CT images and a perfusion map, and solving the optimization problem for reconstruction of the CT images.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
acquiring (202), via one or more hardware processors, a plurality of frames from a low-dose X-ray computerized tomography (CT) perfusion scan of a subject;
identifying (204), via the one or more hardware processors, one or more contrast enhanced frames, from among the plurality of frames,
obtaining (206), via the one or more hardware processors, a plurality of tissue enhancement measurements (C) from the one or more contrast enhanced frames, wherein the plurality of tissue enhancement measurements (C) is obtained from the one or more contrast enhanced frames by using an equation $C = {C}_{a} R ⊙ D \left(V\right) ,$ and
wherein *Cₐ* is a block-circulant construction of an arterial input function (AIF), 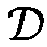 (.) outputs a diagonal matrix with elements of *V* along corresponding diagonal, *V* is a perfusion map constructed from the one or more contrast enhanced frames, *R* represents an imaging system, and ⊙ represents element-wise product;
modelling (208), via the one or more hardware processors, an optimization problem for joint estimation of a set of structural CT images and a perfusion map, based on the plurality of tissue enhancement measurements (*C*); and
solving (210), via the one or more hardware processors, the optimization problem by determining an average structural prior image (*U̅*) and a functional image (*V*) with a 3D image-gradient-based prior and another patch-based prior with a fixed patch length, comprising, iteratively performing, till a calculated relative change in *V* is below a threshold:
reconstructing (210a) a pre-defined number of frames (*M*) of a structural image obtained using the 3D image-gradient-based prior and averaging the *M* frames to obtain the average structural prior image (*U̅*); and
applying (210b) deconvolution term and the patch-based prior information with information from the average structural prior image (*U̅*), to obtain the functional image *V*.

2. The method as claimed in claim 1, wherein the optimization problem is modelled for the joint estimation of the set of structural CT images and the perfusion map, using an equation $arg \begin{matrix}min \\ U , V\end{matrix} {D}_{U} \left(U\left|Y\right.\right) + {λ}_{U} Φ \left(U\right) + {D}_{V} \left(V\left|C\right.\right) + {λ}_{V} Ψ \left(V\left|U\right.\right) ,$ and
wherein *D_{U}*(*U*|*Y*) represents data fidelity terms corresponding to reconstruction of the set of structural CT images, *D_{V}*(*V*|*C*) represents data fidelity terms corresponding reconstruction of the perfusion map, *Φ*(*U*) represents one or more regularizes for the set of structural CT images, and *ψ*(*V*|*U*) represents one or more regularizes for the perfusion map.

3. The method as claimed in claim 1, wherein structural and functional variations representing one or more neurodegenerative diseases are identified by modelling the optimization problem based on the set of structural CT images and the perfusion map.

4. The method as claimed in claim 3, wherein progression of a neurodegenerative disease over a period of time is determined by:
processing a first low-dose X-ray computerized tomography (LD-CT) obtained at a first instance and a second LD-CT obtained at a second instance, using a Deep Neural Network (DNN), comprises:
determining (302) one or more acquisition-specific differences between the first LD-CT and the second LD-CT, using a first sub-network of the DNN;
determining (304) one or more of the structural and functional differences between the first LD-CT and the second LD-CT, using a second sub-network of the DNN;
generating (306) a transformation map by processing CT image from a calibration scan, wherein the transformation map represents one or more transformations the first LD-CT has to undergo for the first LD-CT to match the second LD-CT; and
transforming (308) the features of the functional perfusion images from the first LD-CT scan and the second LD-CT scan using the transformation map to identify one or more structural and functional changes representing the progression of the neurodegenerative disease between the first instance and the second instance.

5. A system (100), comprising:
one or more hardware processors (102);
a communication interface (112); and
a memory (104) comprising a plurality of instructions, wherein the plurality of instruction when executed, cause the one or more hardware processors to:
acquire a plurality of frames from a low-dose X-ray computerized tomography (CT) perfusion scan of a subject;
identify one or more contrast enhanced frames, from among the plurality of frames;
obtain a plurality of tissue enhancement measurements (*C*) from the one or more contrast enhanced frames, wherein the plurality of tissue enhancement measurements (*C*) is obtained from the one or more contrast enhanced frames by using an equation $C = {C}_{a} R ⊙ D \left(V\right) ,$ and
wherein *Cₐ* is a block-circulant construction of an arterial input function (AIF), 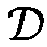 (.) outputs a diagonal matrix with elements of *V* along corresponding diagonal, *V* is a perfusion map constructed from the one or more contrast enhanced frames, *R* represents an imaging system, and ⊙ represents element-wise product;
model an optimization problem for joint estimation of a set of structural CT images and a perfusion map, based on the plurality of tissue enhancement measurements (*C*); and
solve the optimization problem by determining an average structural prior image (*U̅*) and a functional image (*V*) with a 3D image-gradient-based prior and another patch-based prior with a fixed patch length, by, iteratively performing, till a calculated relative change in *V* is below a threshold:
reconstructing a pre-defined number of frames (*M*) of a structural image obtained using the 3D image-gradient-based prior and averaging the *M* frames to obtain the average structural prior image (*U̅*); and
applying deconvolution term and the patch-based prior information with information from the average structural prior image (*U̅*), to obtain the functional image *V*.

6. The system as claimed in claim 5, wherein the one or more hardware processors are configured to model the optimization problem for the joint estimation of the set of structural CT images and the perfusion map, using an equation $arg \begin{matrix}min \\ U , V\end{matrix} {D}_{U} \left(U\left|Y\right.\right) + {λ}_{U} Φ \left(U\right) + {D}_{V} \left(V\left|C\right.\right) + {λ}_{V} Ψ \left(V\left|U\right.\right) ,$ and
wherein *D_{U}*(*U*|*Y*) represents data fidelity terms corresponding to reconstruction of the set of structural CT images, *D_{V}*(*V*|*C*) represents data fidelity terms corresponding reconstruction of the perfusion map, *Φ*(*U*) represents one or more regularizes for the set of structural CT images, and *ψ*(*V*|*U*) represents one or more regularizes for the perfusion map.

7. The system as claimed in claim 5, wherein the one or more hardware processors are configured to identify structural and functional variations representing one or more neurodegenerative diseases by modelling the optimization problem based on the set of structural CT images and the perfusion map.

8. The system as claimed in claim 7 wherein the one or more hardware processors are configured to determine progression of a neurodegenerative disease over a period of time by processing a first low-dose X-ray computerized tomography (LD-CT) obtained at a first instance and a second LD-CT obtained at a second instance, using a Deep Neural Network (DNN), by:
determining one or more acquisition-specific differences between the first LD-CT and the second LD-CT, using a first sub-network of the DNN;
determining one or more of the structural and functional differences between the first LD-CT and the second LD-CT, using a second sub-network of the DNN;
generating a transformation map by processing CT image from a calibration scan to determine one or more acquisition-specific differences and one or more of the structural and functional differences, wherein the transformation map represents one or more transformations the first LD-CT has to undergo for the first LD-CT to match the second LD-CT; and
transforming the features of the functional perfusion images from the two scans using the transformation map to identify one or more structural and functional changes representing the progression of the neurodegenerative disease between the first instance and the second instance.

9. One or more non-transitory machine-readable information storage mediums comprising one or more instructions which when executed by one or more hardware processors cause:
acquiring a plurality of frames from a low-dose X-ray computerized tomography (CT) perfusion scan of a subject;
identifying one or more contrast enhanced frames, from among the plurality of frames;
obtaining a plurality of tissue enhancement measurements (*C*) from the one or more contrast enhanced frames, wherein the plurality of tissue enhancement measurements (*C*) is obtained from the one or more contrast enhanced frames by using an equation $C = {C}_{a} R ⊙ D \left(V\right) ,$ and
wherein *Cₐ* is a block-circulant construction of an arterial input function (AIF), 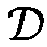 (.) outputs a diagonal matrix with elements of *V* along corresponding diagonal, *V* is a perfusion map constructed from the one or more contrast enhanced frames, *R* represents an imaging system, and ⊙ represents element-wise product;
modelling an optimization problem for joint estimation of a set of structural CT images and a perfusion map, based on the plurality of tissue enhancement measurements (*C*); and
solving the optimization problem by determining an average structural prior image (*U̅*) and a functional image (*V*) with a 3D image-gradient-based prior and another patch-based prior with a fixed patch length, comprising, iteratively performing, till a calculated relative change in *V* is below a threshold:
reconstructing a pre-defined number of frames (*M*) of a structural image obtained using the 3D image-gradient-based prior and averaging the *M* frames to obtain the average structural prior image (*U̅*); and
applying deconvolution term and the patch-based prior information with information from the average structural prior image (*U̅*), to obtain the functional image V.

10. The one or more non-transitory machine-readable information storage mediums as claimed in claim 9, wherein the optimization problem is modelled for the joint estimation of the set of structural CT images and the perfusion map, using an equation $arg \begin{matrix}min \\ U , V\end{matrix} {D}_{U} \left(U\left|Y\right.\right) + {λ}_{U} Φ \left(U\right) + {D}_{V} \left(V\left|C\right.\right) + {λ}_{V} Ψ \left(V\left|U\right.\right) ,$ and
wherein *D_{U}*(*U*|*Y*) represents data fidelity terms corresponding to reconstruction of the set of structural CT images, *D_{V}*(*V*|*C*) represents data fidelity terms corresponding reconstruction of the perfusion map, *Φ*(*U*) represents one or more regularizes for the set of structural CT images, and *ψ*(*V*|*U*) represents one or more regularizes for the perfusion map.

11. The one or more non-transitory machine-readable information storage mediums as claimed in claim 9, wherein by modelling the optimization problem based on the set of structural CT images and the perfusion map, structural and functional variations representing one or more neurodegenerative diseases are identified.

12. The one or more non-transitory machine-readable information storage mediums as claimed in claim 11 wherein progression of a neurodegenerative disease over a period of time is determined by processing a first low-dose X-ray computerized tomography (LD-CT) obtained at a first instance and a second LD-CT obtained at a second instance, using a Deep Neural Network (DNN), comprises:
determining one or more acquisition-specific differences between the first LD-CT and the second LD-CT, using a first sub-network of the DNN;
determining one or more of the structural and functional differences between the first LD-CT and the second LD-CT, using a second sub-network of the DNN;
generating a transformation map by processing CT image from a calibration scan, wherein the transformation map represents one or more transformations the first LD-CT has to undergo for the first LD-CT to match the second LD-CT; and
transforming the features of the functional perfusion images from the first LD-CT scan and the second LD-CT scan using the transformation map to identify one or more structural and functional changes representing the progression of the neurodegenerative disease between the first instance and the second instance.

## Patentansprüche

1. Prozessorimplementiertes Verfahren, umfassend:
Erfassen (202), über einen oder mehrere Hardwareprozessoren, einer Mehrzahl von Einzelbildern aus einem niedrigdosierten Röntgen-Computertomographie-(CT)-Perfusionsscan eines Subjekts;
Identifizieren (204), über den einen oder die mehreren Hardwareprozessoren, eines oder mehrerer kontrastverstärkter Einzelbilder aus der Mehrzahl von Einzelbildern,
Erhalten (206), über den einen oder die mehreren Hardwareprozessoren, einer Mehrzahl von Gewebeverstärkungsmessungen (*C*) aus dem einen oder den mehreren kontrastverstärkten Einzelbildern, wobei die Mehrzahl von Gewebeverstärkungsmessungen (*C*) aus dem einen oder den mehreren kontrastverstärkten Einzelbildern unter Verwendung einer Gleichung $C = {C}_{a} R ⊙ D \left(V\right)$ erhalten wird, und
wobei *Cₐ* eine blockzirkuläre Konstruktion einer arteriellen Eingangsfunktion (AIF) ist, 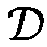 (.) eine Diagonalmatrix mit Elementen von *V* entlang der entsprechenden Diagonale ausgibt, *V* eine Perfusionskarte ist, die aus dem einen oder den mehreren kontrastverstärkten Einzelbildern konstruiert ist, R ein Bildgebungssystem darstellt und ⊙ ein elementweises Produkt darstellt;
Modellieren (208), über den einen oder die mehreren Hardwareprozessoren, eines Optimierungsproblems zur gemeinsamen Schätzung eines Satzes von strukturellen CT-Bildern und einer Perfusionskarte, basierend auf der Mehrzahl von Gewebeverstärkungsmessungen (*C*); und
Lösen (210), über den einen oder die mehreren Hardwareprozessoren, des Optimierungsproblems durch Bestimmen eines durchschnittlichen strukturellen vorherigen Bildes (*U̅*) und eines funktionellen Bildes (*V*) mit einem 3D-Bildgradienten-basierten vorherigen und einem anderen Patch-basierten vorherigen mit einer festen Patch-Länge, umfassend iteratives Durchführen, bis eine berechnete relative Änderung in *V* unter einem Schwellenwert liegt:
Rekonstruieren (210a) einer vordefinierten Anzahl von Einzelbildern (*M*) eines strukturellen Bildes, das unter Verwendung des 3D-Bildgradienten-basierten vorherigen erhalten wurde, und Mitteln der *M* Einzelbilder, um das durchschnittliche strukturelle vorherige Bild (*U̅*) zu erhalten; und
Anwenden (210b) eines Entfaltungsterms und der Patch-basierten vorherigen Informationen mit Informationen aus dem durchschnittlichen strukturellen vorherigen Bild (*U̅*), um das funktionelle Bild *V* zu erhalten.

2. Verfahren nach Anspruch 1, wobei das Optimierungsproblem für die gemeinsame Schätzung des Satzes von strukturellen CT-Bildern und der Perfusionskarte unter Verwendung einer Gleichung $arg \begin{matrix}min \\ U , V\end{matrix} {D}_{U} \left(U\left|Y\right.\right) + {λ}_{U} Φ \left(U\right) + {D}_{V} \left(V\left|C\right.\right) + {λ}_{V} Ψ \left(V\left|U\right.\right)$ modelliert wird, und wobei *D_{U}*(*U*|*Y*) Datenwiedergabeterme darstellt, die der Rekonstruktion des Satzes von strukturellen CT-Bildern entsprechen, *D_{V}*(*V*|*C*) Datenwiedergabeterme darstellt, die der Rekonstruktion der Perfusionskarte entsprechen, *Φ*(*U*) eine oder mehrere Regularisierungen für den Satz von strukturellen CT-Bildern darstellt und *ψ*(*V*|*U*) eine oder mehrere Regularisierungen für die Perfusionskarte darstellt.

3. Verfahren nach Anspruch 1, wobei strukturelle und funktionelle Variationen, die eine oder mehrere neurodegenerative Erkrankungen darstellen, durch Modellieren des Optimierungsproblems basierend auf dem Satz von strukturellen CT-Bildern und der Perfusionskarte identifiziert werden.

4. Verfahren nach Anspruch 3, wobei das Fortschreiten einer neurodegenerativen Erkrankung über einen Zeitraum bestimmt wird durch:
Verarbeiten einer ersten niedrigdosierten Röntgen-Computertomographie (LD-CT), die in einer ersten Instanz erhalten wird, und einer zweiten LD-CT, die in einer zweiten Instanz erhalten wird, unter Verwendung eines tiefen neuronalen Netzwerks (DNN), umfassend:
Bestimmen (302) eines oder mehrerer erfassungsspezifischer Unterschiede zwischen der ersten LD-CT und der zweiten LD-CT unter Verwendung eines ersten Teilnetzwerks des DNN;
Bestimmen (304) eines oder mehrerer der strukturellen und funktionellen Unterschiede zwischen der ersten LD-CT und der zweiten LD-CT unter Verwendung eines zweiten Teilnetzwerks des DNN;
Erzeugen (306) einer Transformationskarte durch Verarbeiten eines CT-Bildes aus einem Kalibrierungsscan, wobei die Transformationskarte eine oder mehrere Transformationen darstellt, die die erste LD-CT durchlaufen muss, damit die erste LD-CT mit der zweiten LD-CT übereinstimmt; und
Transformieren (308) der Merkmale der funktionellen Perfusionsbilder aus dem ersten LD-CT-Scan und dem zweiten LD-CT-Scan unter Verwendung der Transformationskarte, um eine oder mehrere strukturelle und funktionelle Änderungen zu identifizieren, die das Fortschreiten der neurodegenerativen Erkrankung zwischen der ersten Instanz und der zweiten Instanz darstellen.

5. System (100), umfassend:
einen oder mehrere Hardwareprozessoren (102);
eine Kommunikationsschnittstelle (112); und
einen Speicher (104), der eine Mehrzahl von Anweisungen umfasst, wobei die Mehrzahl von Anweisungen, wenn sie ausgeführt werden, den einen oder die mehreren Hardwareprozessoren veranlassen zum:
Erfassen einer Mehrzahl von Einzelbildern aus einem niedrigdosierten Röntgen-Computertomographie-(CT)-Perfusionsscan eines Subjekts;
Identifizieren eines oder mehrerer kontrastverstärkter Einzelbilder aus der Mehrzahl von Einzelbildern;
Erhalten einer Mehrzahl von Gewebeverstärkungsmessungen (*C*) aus dem einen oder den mehreren kontrastverstärkten Einzelbildern, wobei die Mehrzahl von Gewebeverstärkungsmessungen (*C*) aus dem einen oder den mehreren kontrastverstärkten Einzelbildern unter Verwendung einer Gleichung $C = {C}_{a} R ⊙ D \left(V\right)$ erhalten wird, und
wobei *Cₐ* eine blockzirkuläre Konstruktion einer arteriellen Eingangsfunktion (AIF) ist, 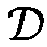 (.) eine Diagonalmatrix mit Elementen von *V* entlang der entsprechenden Diagonale ausgibt, *V* eine Perfusionskarte ist, die aus dem einen oder den mehreren kontrastverstärkten Einzelbildern konstruiert ist, *R* ein Bildgebungssystem darstellt und ⊙ ein elementweises Produkt darstellt;
Modellieren eines Optimierungsproblems zur gemeinsamen Schätzung eines Satzes von strukturellen CT-Bildern und einer Perfusionskarte, basierend auf der Mehrzahl von Gewebeverstärkungsmessungen (*C*); und
Lösen des Optimierungsproblems durch Bestimmen eines durchschnittlichen strukturellen vorherigen Bildes (*U̅*) und eines funktionellen Bildes (*V*) mit einem 3D-Bildgradienten-basierten vorherigen und einem anderen Patch-basierten vorherigen mit einer festen Patch-Länge, durch iteratives Durchführen, bis eine berechnete relative Änderung in *V* unter einem Schwellenwert liegt:
Rekonstruieren einer vordefinierten Anzahl von Einzelbildern (*M*) eines strukturellen Bildes, das unter Verwendung des 3D-Bildgradienten-basierten vorherigen erhalten wurde, und Mitteln der *M* Einzelbilder, um das durchschnittliche strukturelle vorherige Bild (*U̅*) zu erhalten; und
Anwenden eines Entfaltungsterms und der Patch-basierten vorherigen Informationen mit Informationen aus dem durchschnittlichen strukturellen vorherigen Bild (*U̅*), um das funktionelle Bild *V* zu erhalten.

6. System nach Anspruch 5, wobei der eine oder die mehreren Hardwareprozessoren konfiguriert sind, um das Optimierungsproblem für die gemeinsame Schätzung des Satzes von strukturellen CT-Bildern und der Perfusionskarte unter Verwendung einer Gleichung $arg \begin{matrix}min \\ U , V\end{matrix} {D}_{U} \left(U\left|Y\right.\right) + {λ}_{U} Φ \left(U\right) + {D}_{V} \left(V\left|C\right.\right) + {λ}_{V} Ψ \left(V\left|U\right.\right) zu modellieren ,$ und
wobei *D_{U}*(*U*|*Y*) Datenwiedergabeterme darstellt, die der Rekonstruktion des Satzes von strukturellen CT-Bildern entsprechen, *D_{V}*(*V*|*C*) Datenwiedergabeterme darstellt, die der Rekonstruktion der Perfusionskarte entsprechen, *Φ*(*U*) eine oder mehrere Regularisierungen für den Satz von strukturellen CT-Bildern darstellt und *ψ*(*V*|*U*) eine oder mehrere Regularisierungen für die Perfusionskarte darstellt.

7. System nach Anspruch 5, wobei der eine oder die mehreren Hardwareprozessoren konfiguriert sind, um strukturelle und funktionelle Variationen, die eine oder mehrere neurodegenerative Erkrankungen darstellen, durch Modellieren des Optimierungsproblems basierend auf dem Satz von strukturellen CT-Bildern und der Perfusionskarte zu identifizieren.

8. System nach Anspruch 7, wobei der eine oder die mehreren Hardwareprozessoren konfiguriert sind, um das Fortschreiten einer neurodegenerativen Erkrankung über einen Zeitraum durch Verarbeiten einer ersten niedrigdosierten Röntgen-Computertomographie (LD-CT), die in einer ersten Instanz erhalten wird, und einer zweiten LD-CT, die in einer zweiten Instanz erhalten wird, unter Verwendung eines tiefen neuronalen Netzwerks (DNN) zu bestimmen durch:
Bestimmen eines oder mehrerer erfassungsspezifischer Unterschiede zwischen der ersten LD-CT und der zweiten LD-CT unter Verwendung eines ersten Teilnetzwerks des DNN;
Bestimmen eines oder mehrerer der strukturellen und funktionellen Unterschiede zwischen der ersten LD-CT und der zweiten LD-CT unter Verwendung eines zweiten Teilnetzwerks des DNN;
Erzeugen einer Transformationskarte durch Verarbeiten eines CT-Bildes aus einem Kalibrierungsscan, um einen oder mehrere erfassungsspezifische Unterschiede und einen oder mehrere der strukturellen und funktionellen Unterschiede zu bestimmen, wobei die Transformationskarte eine oder mehrere Transformationen darstellt, die die erste LD-CT durchlaufen muss, damit die erste LD-CT mit der zweiten LD-CT übereinstimmt; und
Transformieren der Merkmale der funktionellen Perfusionsbilder aus den zwei Scans unter Verwendung der Transformationskarte, um eine oder mehrere strukturelle und funktionelle Änderungen zu identifizieren, die das Fortschreiten der neurodegenerativen Erkrankung zwischen der ersten Instanz und der zweiten Instanz darstellen.

9. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, bewirken:
Erfassen einer Mehrzahl von Einzelbildern aus einem niedrigdosierten Röntgen-Computertomographie-(CT)-Perfusionsscan eines Subjekts; Identifizieren eines oder mehrerer kontrastverstärkter Einzelbilder aus der Mehrzahl von Einzelbildern;
Erhalten einer Mehrzahl von Gewebeverstärkungsmessungen (*C*) aus dem einen oder den mehreren kontrastverstärkten Einzelbildern, wobei die Mehrzahl von Gewebeverstärkungsmessungen (*C*) aus dem einen oder den mehreren kontrastverstärkten Einzelbildern unter Verwendung einer Gleichung $C = {C}_{a} R ⊙ D \left(V\right)$ erhalten wird, und
wobei *Cₐ* eine blockzirkuläre Konstruktion einer arteriellen Eingangsfunktion (AIF) ist, 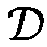 (.) eine Diagonalmatrix mit Elementen von *V* entlang der entsprechenden Diagonale ausgibt, *V* eine Perfusionskarte ist, die aus dem einen oder den mehreren kontrastverstärkten Einzelbildern konstruiert ist, *R* ein Bildgebungssystem darstellt und ⊙ ein elementweises Produkt darstellt;
Modellieren eines Optimierungsproblems zur gemeinsamen Schätzung eines Satzes von strukturellen CT-Bildern und einer Perfusionskarte, basierend auf der Mehrzahl von Gewebeverstärkungsmessungen (*C*); und
Lösen des Optimierungsproblems durch Bestimmen eines durchschnittlichen strukturellen vorherigen Bildes (*U̅*) und eines funktionellen Bildes (*V*) mit einem 3D-Bildgradienten-basierten vorherigen und einem anderen Patch-basierten vorherigen mit einer festen Patch-Länge, umfassend iteratives Durchführen, bis eine berechnete relative Änderung in *V* unter einem Schwellenwert liegt:
Rekonstruieren einer vordefinierten Anzahl von Einzelbildern (*M*) eines strukturellen Bildes, das unter Verwendung des 3D-Bildgradienten-basierten vorherigen erhalten wurde, und Mitteln der *M* Einzelbilder, um das durchschnittliche strukturelle vorherige Bild (*U̅*) zu erhalten; und
Anwenden eines Entfaltungsterms und der Patch-basierten vorherigen Informationen mit Informationen aus dem durchschnittlichen strukturellen vorherigen Bild (*U̅*), um das funktionelle Bild *V* zu erhalten.

10. Ein oder mehrere nichtflüchtige maschinenlesbare Informationsspeichermedien nach Anspruch 9, wobei das Optimierungsproblem für die gemeinsame Schätzung des Satzes von strukturellen CT-Bildern und der Perfusionskarte unter Verwendung einer Gleichung $arg \begin{matrix}min \\ U , V\end{matrix} {D}_{U} \left(U\left|Y\right.\right) + {λ}_{U} Φ \left(U\right) + {D}_{V} \left(V\left|C\right.\right) + {λ}_{V} Ψ \left(V\left|U\right.\right) modelliert wird ,$ und wobei *D_{U}*(*U*|*Y*) Datenwiedergabeterme darstellt, die der Rekonstruktion des Satzes von strukturellen CT-Bildern entsprechen, *D_{V}*(*V*|*C*) Datenwiedergabeterme darstellt, die der Rekonstruktion der Perfusionskarte entsprechen, *Φ*(*U*) eine oder mehrere Regularisierungen für den Satz von strukturellen CT-Bildern darstellt und *ψ*(*V*|*U*) eine oder mehrere Regularisierungen für die Perfusionskarte darstellt.

11. Ein oder mehrere nichtflüchtige maschinenlesbare Informationsspeichermedien nach Anspruch 9, wobei durch Modellieren des Optimierungsproblems basierend auf dem Satz von strukturellen CT-Bildern und der Perfusionskarte strukturelle und funktionelle Variationen identifiziert werden, die eine oder mehrere neurodegenerative Erkrankungen darstellen.

12. Ein oder mehrere nichtflüchtige maschinenlesbare Informationsspeichermedien nach Anspruch 11, wobei das Fortschreiten einer neurodegenerativen Erkrankung über einen Zeitraum durch Verarbeiten einer ersten niedrigdosierten Röntgen-Computertomographie (LD-CT), die in einer ersten Instanz erhalten wird, und einer zweiten LD-CT, die in einer zweiten Instanz erhalten wird, unter Verwendung eines tiefen neuronalen Netzwerks (DNN) bestimmt wird, umfassend:
Bestimmen eines oder mehrerer erfassungsspezifischer Unterschiede zwischen der ersten LD-CT und der zweiten LD-CT unter Verwendung eines ersten Teilnetzwerks des DNN;
Bestimmen eines oder mehrerer der strukturellen und funktionellen Unterschiede zwischen der ersten LD-CT und der zweiten LD-CT unter Verwendung eines zweiten Teilnetzwerks des DNN;
Erzeugen einer Transformationskarte durch Verarbeiten eines CT-Bildes aus einem Kalibrierungsscan, wobei die Transformationskarte eine oder mehrere Transformationen darstellt, die die erste LD-CT durchlaufen muss, damit die erste LD-CT mit der zweiten LD-CT übereinstimmt; und
Transformieren der Merkmale der funktionellen Perfusionsbilder aus dem ersten LD-CT-Scan und dem zweiten LD-CT-Scan unter Verwendung der Transformationskarte, um eine oder mehrere strukturelle und funktionelle Änderungen zu identifizieren, die das Fortschreiten der neurodegenerativen Erkrankung zwischen der ersten Instanz und der zweiten Instanz darstellen.

## Revendications

1. Procédé mis en œuvre par processeur, comprenant :
l'acquisition (202), via un ou plusieurs processeurs matériels, d'une pluralité de trames à partir d'un balayage de perfusion de tomodensitométrie (CT) à rayons X à faible dose d'un sujet ;
l'identification (204), via les un ou plusieurs processeurs matériels, d'une ou de plusieurs trames rehaussées par un produit de contraste, parmi la pluralité de trames,
l'obtention (206), via les un ou plusieurs processeurs matériels, d'une pluralité de mesures de rehaussement tissulaire (C) à partir des une ou plusieurs trames rehaussées par un produit de contraste, dans lequel la pluralité de mesures de rehaussement tissulaire (*C*) est obtenue à partir des une ou plusieurs trames rehaussées par un produit de contraste en utilisant une équation $C = {C}_{a} R ⊙ D \left(V\right) ,$ et
dans lequel *Cₐ* est une construction bloc-circulante d'une fonction d'entrée artérielle (AIF), 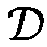 (.) délivre en sortie une matrice diagonale avec des éléments de *V* le long d'une diagonale correspondante, *V* est une carte de perfusion construite à partir des une ou plusieurs trames rehaussées par un produit de contraste, *R* représente un système d'imagerie, et ⊙ représente un produit élément par élément ;
la modélisation (208), via les un ou plusieurs processeurs matériels, d'un problème d'optimisation pour une estimation conjointe d'un ensemble d'images CT structurelles et d'une carte de perfusion, sur la base de la pluralité de mesures de rehaussement tissulaire (*C*) ; et
la résolution (210), via les un ou plusieurs processeurs matériels, du problème d'optimisation en déterminant une image structurelle moyenne utilisée comme a priori (*U̅*) et une image fonctionnelle (*V*) avec un a priori fondé sur le gradient d'image 3D et un autre a priori fondé sur des patchs de longueur fixe, comprenant, la réalisation itérative, jusqu'à ce qu'un changement relatif calculé dans *V* soit inférieur à un seuil :
la reconstruction (210a) d'un nombre prédéfini de trames (*M*) d'une image structurelle obtenue en utilisant l'a priori fondé sur le gradient d'image 3D et le calcul de la moyenne des *M* trames pour obtenir l'image structurelle moyenne utilisée comme a priori (*U̅*) ; et
l'application (210b) d'un terme de déconvolution et des informations a priori fondées sur des patchs avec des informations provenant de l'image structurelle moyenne utilisée comme a priori (*U̅*), pour obtenir l'image fonctionnelle *V*.

2. Procédé selon la revendication 1, dans lequel le problème d'optimisation est modélisé pour l'estimation conjointe de l'ensemble d'images CT structurelles et de la carte de perfusion, en utilisant une équation $arg \begin{matrix}min \\ U , V\end{matrix} {D}_{U} \left(U\left|Y\right.\right) + {λ}_{U} Φ \left(U\right) + {D}_{V} \left(V\left|C\right.\right) + {λ}_{V} Ψ \left(V\left|U\right.\right) ,$ et
dans lequel *D_{U}*(*U*|*Y*) représente des termes de fidélité de données correspondant à la reconstruction de l'ensemble d'images CT structurelles, *D_{V}*(*V*|*C*) représente des termes de fidélité de données correspondant à la reconstruction de la carte de perfusion, *Φ*(*U*) représente un ou plusieurs termes de régularisation pour l'ensemble d'images CT structurelles, et *Ψ*(*V*|*U*) représente un ou plusieurs termes de régularisation pour la carte de perfusion.

3. Procédé selon la revendication 1, dans lequel des variations structurelles et fonctionnelles représentant une ou plusieurs maladies neurodégénératives sont identifiées en modélisant le problème d'optimisation sur la base de l'ensemble d'images CT structurelles et de la carte de perfusion.

4. Procédé selon la revendication 3, dans lequel la progression d'une maladie neurodégénérative sur une période de temps est déterminée par :
le traitement d'une première tomodensitométrie à rayons X à faible dose (LD-CT) obtenue à un premier moment et d'une seconde LD-CT obtenue à un second moment, en utilisant un réseau neuronal profond (DNN), comprend :
la détermination (302) d'une ou plusieurs différences spécifiques à l'acquisition entre la première LD-CT et la seconde LD-CT, en utilisant un premier sous-réseau du DNN ;
la détermination (304) d'une ou plusieurs des différences structurelles et fonctionnelles entre la première LD-CT et la seconde LD-CT, en utilisant un second sous-réseau du DNN ;
la génération (306) d'une carte de transformation en traitant une image CT à partir d'un balayage d'étalonnage, dans lequel la carte de transformation représente une ou plusieurs transformations que la première LD-CT doit subir pour que la première LD-CT corresponde à la seconde LD-CT ; et
la transformation (308) des caractéristiques des images de perfusion fonctionnelles à partir du premier balayage LD-CT et du second balayage LD-CT en utilisant la carte de transformation pour identifier un ou plusieurs changements structurels et fonctionnels représentant la progression de la maladie neurodégénérative entre le premier moment et le second moment.

5. Système (100), comprenant :
un ou plusieurs processeurs matériels (102) ;
une interface de communication (112) ; et
une mémoire (104) comprenant une pluralité d'instructions, dans lequel la pluralité d'instructions, lorsqu'elles sont exécutées, amènent les un ou plusieurs processeurs matériels à :
acquérir une pluralité de trames à partir d'un balayage de perfusion de tomodensitométrie (CT) à rayons X à faible dose d'un sujet ;
identifier une ou plusieurs trames rehaussées par un produit de contraste, parmi la pluralité de trames ;
obtenir une pluralité de mesures de rehaussement tissulaire (*C*) à partir des une ou plusieurs trames rehaussées par un produit de contraste, dans lequel la pluralité de mesures de rehaussement tissulaire (*C*) est obtenue à partir des une ou plusieurs trames rehaussées par un produit de contraste en utilisant une équation $C = {C}_{a} R ⊙ D \left(V\right) ,$ et
dans lequel *Cₐ* est une construction bloc-circulante d'une fonction d'entrée artérielle (AIF), 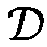 (.) délivre en sortie une matrice diagonale avec des éléments de *V* le long d'une diagonale correspondante, *V* est une carte de perfusion construite à partir des une ou plusieurs trames rehaussées par un produit de contraste, *R* représente un système d'imagerie, et ⊙ représente un produit élément par élément ;
modéliser un problème d'optimisation pour une estimation conjointe d'un ensemble d'images CT structurelles et d'une carte de perfusion, sur la base de la pluralité de mesures de rehaussement tissulaire (*C*) ; et
résoudre le problème d'optimisation en déterminant une image structurelle moyenne utilisée comme a priori (*U̅*) et une image fonctionnelle (*V*) avec un a priori fondé sur le gradient d'image 3D et un autre a priori fondé sur des patchs de longueur fixe, en réalisant itérativement, jusqu'à ce qu'un changement relatif calculé dans *V* soit inférieur à un seuil :
la reconstruction d'un nombre prédéfini de trames (*M*) d'une image structurelle obtenue en utilisant l'a priori fondé sur le gradient d'image 3D et le calcul de la moyenne des *M* trames pour obtenir l'image structurelle moyenne utilisée comme a priori (*U̅*) ; et
l'application d'un terme de déconvolution et des informations a priori fondées sur des patchs avec des informations provenant de l'image structurelle moyenne utilisée comme a priori (*U̅*), pour obtenir l'image fonctionnelle *V*.

6. Système selon la revendication 5, dans lequel les un ou plusieurs processeurs matériels sont configurés pour modéliser le problème d'optimisation pour l'estimation conjointe de l'ensemble d'images CT structurelles et de la carte de perfusion, en utilisant une équation $arg \begin{matrix}min \\ U , V\end{matrix} {D}_{U} \left(U\left|Y\right.\right) + {λ}_{U} Φ \left(U\right) + {D}_{V} \left(V\left|C\right.\right) + {λ}_{V} Ψ \left(V\left|U\right.\right) ,$ et
dans lequel *D_{U}*(*U*|*Y*) représente des termes de fidélité de données correspondant à la reconstruction de l'ensemble d'images CT structurelles, *D_{V}*(*V*|*C*) représente des termes de fidélité de données correspondant à la reconstruction de la carte de perfusion, *Φ*(*U*) représente un ou plusieurs termes de régularisation pour l'ensemble d'images CT structurelles, et *ψ*(*V*|*U*) représente un ou plusieurs termes de régularisation pour la carte de perfusion.

7. Système selon la revendication 5, dans lequel les un ou plusieurs processeurs matériels sont configurés pour identifier des variations structurelles et fonctionnelles représentant une ou plusieurs maladies neurodégénératives en modélisant le problème d'optimisation sur la base de l'ensemble d'images CT structurelles et de la carte de perfusion.

8. Système selon la revendication 7, dans lequel les un ou plusieurs processeurs matériels sont configurés pour déterminer la progression d'une maladie neurodégénérative sur une période de temps en traitant une première tomodensitométrie à rayons X à faible dose (LD-CT) obtenue à un premier moment et une seconde LD-CT obtenue à un second moment, en utilisant un réseau neuronal profond (DNN), par :
la détermination d'une ou plusieurs différences spécifiques à l'acquisition entre la première LD-CT et la seconde LD-CT, en utilisant un premier sous-réseau du DNN ;
la détermination d'une ou plusieurs des différences structurelles et fonctionnelles entre la première LD-CT et la seconde LD-CT, en utilisant un second sous-réseau du DNN ;
la génération d'une carte de transformation en traitant une image CT à partir d'un balayage d'étalonnage pour déterminer une ou plusieurs différences spécifiques à l'acquisition et une ou plusieurs des différences structurelles et fonctionnelles, dans lequel la carte de transformation représente une ou plusieurs transformations que la première LD-CT doit subir pour que la première LD-CT corresponde à la seconde LD-CT ; et
la transformation des caractéristiques des images de perfusion fonctionnelles à partir des deux balayages en utilisant la carte de transformation pour identifier un ou plusieurs changements structurels et fonctionnels représentant la progression de la maladie neurodégénérative entre le premier moment et le second moment.

9. Un ou plusieurs supports de stockage d'informations lisibles par machine non transitoires comprenant une ou plusieurs instructions qui, lorsqu'elles sont exécutées par un ou plusieurs processeurs matériels, amènent :
l'acquisition d'une pluralité de trames à partir d'un balayage de perfusion de tomodensitométrie (CT) à rayons X à faible dose d'un sujet ;
l'identification d'une ou de plusieurs trames rehaussées par un produit de contraste, parmi la pluralité de trames ;
l'obtention d'une pluralité de mesures de rehaussement tissulaire (*C*) à partir des une ou plusieurs trames rehaussées par un produit de contraste, dans lequel la pluralité de mesures de rehaussement tissulaire (*C*) est obtenue à partir des une ou plusieurs trames rehaussées par un produit de contraste en utilisant une équation $C = {C}_{a} R ⊙ D \left(V\right) ,$ et
dans lequel *Cₐ* est une construction bloc-circulante d'une fonction d'entrée artérielle (AIF), 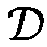 (.) délivre en sortie une matrice diagonale avec des éléments de *V* le long d'une diagonale correspondante, *V* est une carte de perfusion construite à partir des une ou plusieurs trames rehaussées par un produit de contraste, *R* représente un système d'imagerie, et ⊙ représente un produit élément par élément ;
la modélisation d'un problème d'optimisation pour une estimation conjointe d'un ensemble d'images CT structurelles et d'une carte de perfusion, sur la base de la pluralité de mesures de rehaussement tissulaire (*C*) ; et
la résolution du problème d'optimisation en déterminant une image structurelle moyenne utilisée comme a priori (*U̅*) et une image fonctionnelle (*V*) avec un a priori fondé sur le gradient d'image 3D et un autre a priori fondé sur des patchs de longueur fixe, comprenant, la réalisation itérative, jusqu'à ce qu'un changement relatif calculé dans *V* soit inférieur à un seuil :
la reconstruction d'un nombre prédéfini de trames (*M*) d'une image structurelle obtenue en utilisant l'a priori fondé sur le gradient d'image 3D et le calcul de la moyenne des *M* trames pour obtenir l'image structurelle moyenne utilisée comme a priori (*U̅*) ; et
l'application d'un terme de déconvolution et des informations a priori fondées sur des patchs avec des informations provenant de l'image structurelle moyenne utilisée comme a priori (*U̅*), pour obtenir l'image fonctionnelle *V*.

10. Un ou plusieurs supports de stockage d'informations lisibles par machine non transitoires selon la revendication 9, dans lesquels le problème d'optimisation est modélisé pour l'estimation conjointe de l'ensemble d'images CT structurelles et de la carte de perfusion, en utilisant une équation $arg \begin{matrix}min \\ U , V\end{matrix} {D}_{U} \left(U\left|Y\right.\right) + {λ}_{U} Φ \left(U\right) + {D}_{V} \left(V\left|C\right.\right) + {λ}_{V} Ψ \left(V\left|U\right.\right) , et$ dans lequel *D_{U}*(*U*|*Y*) représente des termes de fidélité de données correspondant à la reconstruction de l'ensemble d'images CT structurelles, *D_{V}*(*V*|*C*) représente des termes de fidélité de données correspondant à la reconstruction de la carte de perfusion, *Φ*(*U*) représente un ou plusieurs termes de régularisation pour l'ensemble d'images CT structurelles, et *ψ*(*V*|*U*) représente un ou plusieurs termes de régularisation pour la carte de perfusion.

11. Un ou plusieurs supports de stockage d'informations lisibles par machine non transitoires selon la revendication 9, dans lesquels en modélisant le problème d'optimisation sur la base de l'ensemble d'images CT structurelles et de la carte de perfusion, des variations structurelles et fonctionnelles représentant une ou plusieurs maladies neurodégénératives sont identifiées.

12. Un ou plusieurs supports de stockage d'informations lisibles par machine non transitoires selon la revendication 11, dans lesquels la progression d'une maladie neurodégénérative sur une période de temps est déterminée en traitant une première tomodensitométrie à rayons X à faible dose (LD-CT) obtenue à un premier moment et une seconde LD-CT obtenue à un second moment, en utilisant un réseau neuronal profond (DNN), comprend :
la détermination d'une ou plusieurs différences spécifiques à l'acquisition entre la première LD-CT et la seconde LD-CT, en utilisant un premier sous-réseau du DNN ;
la détermination d'une ou plusieurs des différences structurelles et fonctionnelles entre la première LD-CT et la seconde LD-CT, en utilisant un second sous-réseau du DNN ;
la génération d'une carte de transformation en traitant une image CT à partir d'un balayage d'étalonnage, dans lequel la carte de transformation représente une ou plusieurs transformations que la première LD-CT doit subir pour que la première LD-CT corresponde à la seconde LD-CT ; et
la transformation des caractéristiques des images de perfusion fonctionnelles à partir du premier balayage LD-CT et du second balayage LD-CT en utilisant la carte de transformation pour identifier un ou plusieurs changements structurels et fonctionnels représentant la progression de la maladie neurodégénérative entre le premier moment et le second moment.
